(19) Europäisches Patentamt

European Patent Office

Office européen des brevets

(11) EP 1 294 189 A2

(12) EUROPEAN PATENT APPLICATION

(43) Date of publication:
19.03.2003 Bulletin 2003/12

(51) Int Cl.⁷: H04N 5/913

(21) Application number: 02251297.4

(22) Date of filing: 25.02.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: **18.09.2001 JP 2001283180**

(71) Applicant: **SONY CORPORATION Tokyo 141 (JP)**

(72) Inventors:
• **Nishi, Tomohiro, c/o Intellectual Property Dept. Shinagawa-ku, Tokyo 141 (JP)**
• **Ohnishi, Michihiro, c/o Intellectual Property Dept Shinagawa-ku, Tokyo 141 (JP)**

(74) Representative: **Horner, David Richard et al D Young & Co, 21 New Fetter Lane London EC4A 1DA (GB)**

(54) **Optical state modulation**

(57) An optical state modulation method is provided. The method comprises a step of periodically modulating luminance of an original display image in temporal domain so as to present an optical state variation, which is independent of the original display image and does not hamper direct watching thereof, on a recorded image obtained through image-capturing of the original display image.

# FIG.4

**Description**

**BACKGROUND OF THE INVENTION**

1. Field of the Invention

The present invention relates to techniques for inhibiting unauthorised recording of an image displayed on a display device.

2. Description of the Related Art

A technology for preventing unauthorized recording of an image displayed on a display screen (image/video piracy) is disclosed in U.S. Patent 6,018,374. In the related art disclosed in U.S. Patent 6,018,374, the difference of imaging characteristics between human vision and an image-capturing apparatus such as camera is considered, and infrared light is utilized as a means for preventing image/video piracy. Specifically, the related art employs a system in which an infrared light projector is placed in a vicinity of an image projector or any other position far from the screen. In the system, infrared light is projected from the infrared light projector to the screen so that infrared light reflected at the screen can fall upon the image-capturing apparatus operated by a person conducting image/video piracy. In other words, the technology enables recording of an infrared image unrelated to a feature film/video image when image/video piracy is conducted. Accordingly, the quality of the recorded image obtained through image/video piracy can be damaged, and even a location at which image/video piracy has been conducted may be identified. Of course, the audience/spectator/viewer (referred as audience hereafter) directly watching a feature film/video image can enjoy it without any difficulty since infrared light can not be perceived by the human vision.
As described above, sufficient prevention and hampering effect may be accomplished by utilizing infrared light. However, it is desirable to establish a variety of prevention and/or hampering technologies for protecting valuable image/video contents.

**SUMMARY OF THE INVENTION**

Embodiments of the present invention are arranged to modulate an image displayed on a display screen so as to generate an optical state variation that becomes visible in a recorded image obtained through unauthorized image-capturing of the displayed image and hampers watching of the recorded image.
Embodiments of the present invention, seek to provide a technology for applying a temporal modulation to an optical state of an original display image so that, without hampering the direct watching of a displayed image, an optical state variation independent of the original display image can be perceived in a recorded image obtained by image-capturing of the displayed image using an image-capturing apparatus. That is, the modulation technology of the embodiments of the present invention seek to generate hampering noise (the optical state variation independent from the original display image) that becomes visible when the recorded image is watched and becomes invisible or almost invisible when the displayed image is directly watched.
The optical state variation may include a variation in light-dark contrast domain (luminance variation), a variation in color domain, and/or a combination of these variations. In the following section of the present specification, conditions enabling such an optical state variation and application examples utilizing the above-mentioned modulation technology will be described.
Further particular and preferred aspects of the present invention are set out in the accompanying independent and dependent claims. Features of the dependent claims may be combined with features of the independent claims as appropriate, and in combinations other than those explicitly set out in the claims.

**BRIEF DESCRIPTION OF THE DRAWINGS**

The present invention will be described further, by way of example only, with reference to preferred embodiments thereof as illustrated in the accompanying drawings, in which:

Fig. 1 is a graph showing a contrast sensitivity characteristics of human vision as a function of temporal frequency for various average luminance;
Fig. 2 is a graph showing an example of recording luminance appeared on the recorded image;
Fig. 3 is a graph showing contrast sensitivity characteristics of human vision as a function of temporal frequency for different color states;
Fig. 4 shows an example of an optical state modulation application in which a sum of luminance values of two different colors is constant and the luminance values for two different colors vary in opposite phases from each other;

Fig. 5 shows an example of an optical state modulation application in which the luminance values for two different colors vary in the same phase;

Fig. 6 shows an example of configuration of a projector type system (projection light modulation type);

Fig. 7 shows an example of configuration of a rotation filter;

Fig. 8 shows an example of configuration of an optical state modulation apparatus;

Fig. 9 shows an example of configuration of a projector type system (projection light modulation type);

Fig. 10 shows an example of configuration of a drive condition determination apparatus;

Fig. 11 shows an example of configuration of a projector type system (light source modulation type);

Fig. 12 shows another example of configuration of a projector type system (light source modulation type);

Fig. 13 shows an application example of a pulse width modulation type display apparatus;

Fig. 14 shows an example of configuration of a projector type system (image signal modulation type);

Fig. 15 shows an example of configuration of an image signal modulation apparatus;

Fig. 16 shows an example of configuration of a direct view type system (display light modulation type);

Fig. 17 shows another example of configuration of a direct view type system (display light modulation type);

Fig. 18 shows still another example of configuration of a direct view type system (light source modulation type);

Fig. 19 shows still another example of configuration of a direct view type system (light source modulation type); and

Fig. 20 shows an example of configuration of a direct view type system (image signal modulation type).

**DESCRIPTION OF THE PREFERRED EMBODIMENTS**

(A) BASIC PRINCIPLE

(A-1) HUMAN VISUAL CHARACTERISTIC ON CONTRAST VARIATION

In one embodiment of the present invention, the focus is placed on human visual characteristic for optical flickering. Temporal frequency contrast sensitivity of human vision can be obtained by calculating Michelson contrasts (just called "contrast" hereafter) for various temporal frequencies, where the Michelson contrast is a contrast at which the human vision can no longer perceive the flicker of light that is being modulated in sinusoidal fashion in temporal domain.

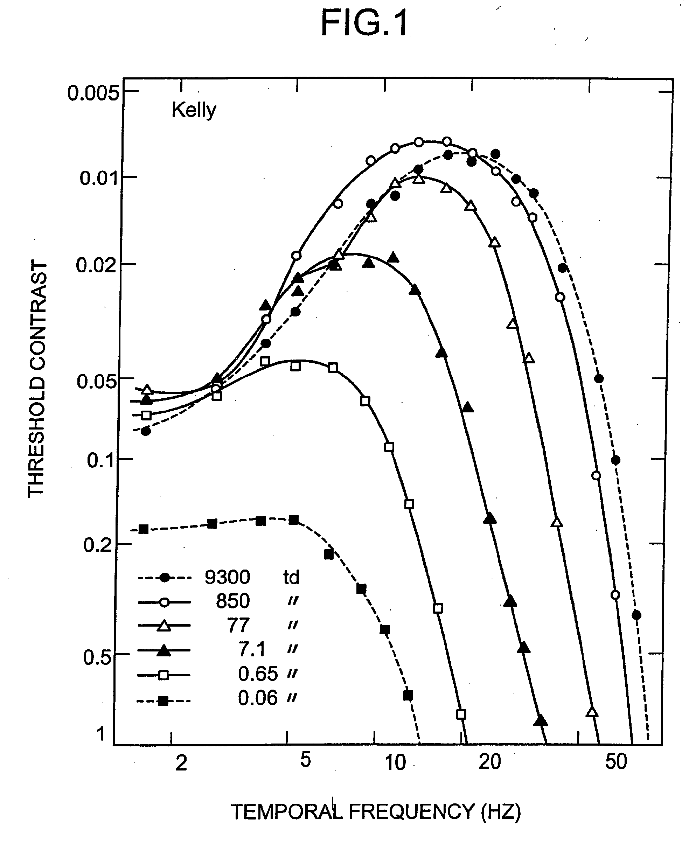

Fig. 1 is a graph showing the contrast sensitivity of the human vision as a function of temporal frequency for various average luminance. That is, Fig. 1 shows experimental results measured in various conditions to determine visibility of the flicker on a display screen when displays of light and dark are repeated thereon. The contrast scaled at the vertical axis of the graph is the value of an amplitude divided by an average luminance, and specifically calculated by (Max - Min)/(Max + Min), where Max and Min are the maximum value and the minimum value of the amplitude, respectively. The temporal frequency scaled at the horizontal axis corresponds to a frequency of the light-dark (contrast) variation. Legend symbols in the figure such as ○ and ● respectively indicate corresponding groups of the measured results for different average luminance of the display screen.

In the figure, the average luminance level is called a retina illuminance and may be expressed with a unit Troland (td). The unit corresponds to the luminous level at a retina of the human vision. In other words, the unit "td" corresponds to the product of an area of pupil ($mm^2$) times luminance ($cd/m^2$). 1000 td corresponds to approximately 40 nit, where a unit "nit" corresponds to the luminance ($cd/m^2$).

Each curve line passing through the same symbols in Fig. 1 indicates a threshold boundary at which the flicker of corresponding average luminance can be perceived by the human vision. The flicker can be perceived at a region below the threshold boundary curve line (region corresponding to contrasts equal or more than the temporal frequency contrast sensitivity of human vision). The flicker can not be perceived at a region above the boundary curve line (region corresponding to contrasts less than the temporal frequency contrast sensitivity of human vision).

As shown in Fig. 1, the human vision sensitivity for the flicker peaks at 10-20 Hz. Here, the higher the human sensitivity becomes, the smaller contrast variation of the flicker can be perceived. Lager contrast variation is required for the flicker to be perceived at frequencies higher than the above peak range. For example, the flicker can not be perceived at an average luminance of 77 td and a contrast variation of 10 % at about 50 Hz. For the human vision, a light with a constant luminance that is a temporal average of the flicker variation is observed.

The above-mentioned human vision characteristic is utilized in display apparatuses such as film movie projectors which uses a frame frequency of 48 Hz and a TV receiver with a CRT display which uses a display frame frequency of 60 Hz, thereby displaying an image without any flicker.

(A-2) MODULATION CONDITION

(A-2-1) MODULATION CONDITION CAUSING HUMAN VISION TO PERCEIVE NO FLICKER WHEN DISPLAY IS DIRECTLY WATCHED

First, a modulation condition is obtained for generating the flicker that can not be perceived by the human vision when a display screen is directly watched. In the following, an example is described to obtain the basic condition to be satisfied in a modulation method of the present embodiment. In the example, a modulation based on a sinusoidal waveform is applied on an image of a uniform luminance displayed on the display screen. That is, the example is described for applying a periodic luminance modulation on an image.

The optical state of the displayed image to which the luminance modulation is applied is described by the following function F(f,t) at time t:

$$F(f,t) = A \times (1-\alpha) + \alpha A \times \cos(2\pi ft) \qquad \text{(Equation 1)}$$

where A is a constant, f is a frequency of the modulation, $\alpha$ is a contrast ($1 \geq \alpha \geq 0$) and t is a time.

The first part of Equation 1 indicates the average luminance of the displayed image, and the second part indicates a temporal modulation component to be added to the first part. Accordingly, the flickering of the displayed image can not be perceived as explained in section (A-1) when an amplitude of the temporal modulation ($\alpha$A) is set to the value equal or less than an amplitude with which the flicker at the temporal modulation frequency f is no longer visible due to the temporal frequency contrast sensitivity of human vision calculated at the luminance of the displayed image. Consequently, for the human vision, only the displayed image having the constant luminance given by A$\times$(1-$\alpha$) is perceived on the display screen.

For example, when the modulation described above is applied to a movie show in a movie theater, only the luminance modulation of temporal frequency f=72 Hz and contrast $\alpha$=20 % is required to apply on the displayed image projected onto a screen. In the present example, it is assumed that all-white-screen of 40 nit is used as the displayed image and displayed at a rate of 24 frame/second. The luminance of 40 nit corresponds to the maximum luminance of a typical film image (approximately 1000 td).

A variety of methods may be utilized for applying the luminance modulation. One of such methods is to use a rotation filter that includes a rotate-able filter part having a sinusoidal density variation along its circumferential direction. The rotation filter is placed in front of a projector lens of a projection type display apparatus (i.e. projector) and its filter part, through which the projection light is transmitted, is being rotated. Alternatively, the rotation filter may also be placed at any other position along the light path of projection.

Since the sinusoidal modulation with a temporal frequency of 72 Hz and a contrast of 20 % corresponds to the frequency and amplitude condition equal of less than that of the temporal frequency contrast sensitivity of human vision, no apparent flicker is observed by the human vision of a person directly watching the display images projected on the screen.

In the present modulation method, the average luminance A(1-$\alpha$) (=40$\times$(1-0.2)) decreases to 80 % of the original average luminance A due to the utilization of the rotation filter. If the reciprocal number of the reduction ratio (1-$\alpha$) is multiplied to the original image luminance in advance or the maximum luminance of the display screen is pre-adjusted to 50 nit, the original luminance (40 nit) may be kept unchanged at the screen to which the display image is projected even when the rotation filter reduces the luminance.

The adjustment of luminance may be accomplished with an image luminance adjustment unit/circuitry. The image luminance adjustment unit/circuitry calculates the above-mentioned reduction ratio based on contrast information that is being stored or inputted from outside, and adjusts a light source luminance according to the calculated reduction ratio. Alternatively, the image luminance adjustment unit/circuitry may adjust a light source luminance according to the reduction ratio that is being stored or inputted from outside.

The method of applying the luminance modulation on the displayed image while generating no visible flicker to the audience is not limited to a case of displaying a uniform image having the same average luminance in the overall area of the display screen (e.g. all-white-screen). The same method may also be applied to a more typical image that has different average luminance depending on a location of corresponding part of the image.

In the present embodiment, it is not necessary to apply the luminance modulation over the overall area of the screen simultaneously. For example, a phase of the luminance modulation may be varied for different positions (spatial positions) of the displayed image. Furthermore, different luminance modulation (different combination of amplitude and frequency) may be applied for different positions (spatial positions) of the displayed image. As described above, the luminance modulation information may be superposed without presenting visible flicker to the audience of the displayed image. Of course, such luminance modulation method can be similarly utilized for a luminance modulation satisfying another condition that will be described in the following.

Furthermore, in the present embodiment, the maximum luminance of the displayed image may be set independently for different image scene. For example, an image scene having a lower maximum luminance may be subject to the luminance modulation (combination of amplitude and frequency) according to the lower maximum luminance, and an image scene having a higher maximum luminance may be subject to the luminance modulation (combination of amplitude and frequency) according to the higher maximum luminance.

As shown in Fig. 1, the contrast threshold does not vary so much even the luminance of the displayed image is varied greatly. For example, when the average luminance is changed from 850 td to 77 td, the corresponding contrast sensitivity curve is merely switched from the characteristic curve with symbol ○ to the characteristic curve with symbol Δ. Furthermore, the contrast sensitivity becomes more severe as the average luminance increases. In other words, the higher the average luminance, the easier to distinguish the contrast variation. In practice, the modulation condition may be simply determined satisfactory based on only the maximum luminance (all-white-screen) among all of the image scenes through out a feature film/video program to be watched.

The present embodiment has been described with the examples utilizing a sinusoidal waveform for the luminance modulation. Alternatively, other types of the luminance modulation may be used for varying the optical state of the displayed image. For example, other modulation waveform (composite waveform) such as a rectangular waveform and pulse waveform may be utilized for the luminance modulation. In this example, the above described condition needs to be satisfied by sinusoidal wave components obtained through spectral analysis such as Fourier transformation performed on the modulation wave (composite wave) used for generating the luminance modulation. That is, the above described condition needs to be satisfied by the amplitude of each sinusoidal wave component of each frequency.

Alternatively, the frequency of the luminance modulation may not be necessary to be constant value. The frequency may be varied in temporal domain providing that the varied frequency still satisfies the above described condition. Furthermore, the waveform of the luminance modulation may not be necessary to be the same. The waveform may be changed in temporal domain providing that the changed waveform still satisfies the above described condition.

Although no lower limit is defined for the amplitude of the sinusoidal waveform in the above described examples, it is preferable to set the amplitude equal or more than an increment threshold of human contrast perception. This condition becomes more important when the contrast variation of the displayed image is to be recorded by an image-capturing apparatus.

The increment threshold of human contrast perception is defined as the minimum luminance difference to be perceived as a contrast difference between an indicator and its background light when the indicator is watched within the background light. In other words, the increment threshold of human contrast perception is a condition for a perceivable contrast difference when the luminance is in a constant state (stationary state), and is not condition during the above described luminance modulation (dynamic state). Under a certain circumstance, the human vision system can not perceive a contrast change even that the contrast $\alpha$ reaches to 100 % during the luminance modulation.

The lower limit of the sinusoidal waveform amplitude is set to be equal or more than the increment threshold of human contrast perception at the luminance of the displayed image because the sensitivity in differentiating the luminance in an image-capturing apparatus such as a video camera and camcorder is not largely different from the increment threshold of human contrast perception. Accordingly, recording of the contrast difference by the image-capturing apparatus is assured if the luminance modulation amplitude is equal or larger than the increment threshold of human contrast perception.

If the sensitivity of differentiating the luminance in the video camera apparatus or any other image-capturing apparatus that may be used in image/video piracy is higher than the increment threshold of human contrast perception or if the smaller contrast difference can be detected, the above mentioned lower limit may be determined accordingly based on an image-capturing characteristic of the video camera apparatus or any other image-capturing apparatus.

(A-2-2) METHOD FOR GENERATING CONTRAST VARIATION TO HAMPER WATCHING OF RECORDED IMAGE OBTAINED BY IMAGE-CAPTURING

Conditions required for causing contrast variation on a recorded image is described in the following.

Images are captured at every constant period of time in the image-capturing apparatus such as a video camera and a camcorder. For example, images are recorded at a frequency of 60 Hz in a video camera with NTSC standard, and a frequency of 50 Hz with PAL standard. The captured image is an image data being an luminous flux inputted into an image-capturing device and integrated over a period of shutter opening at every frame of the image-capturing apparatus.

The integrated value of the recording luminance in each frame image may be calculated by the following integral equation when the luminance-modulated display image (i.e. displayed image) is image-captured, providing that an optical state variation of the displayed image can be expressed with the above-mentioned function F(f,t).

$$R(Nr) = \int_{Nr/Sr}^{Nr/Sr+Tr} F(f,t)\, dt \;\ldots\text{(Equation 2)}$$

where R(Nr) is the recording luminance at frame Nr, Nr is the number of camera frames (Nr = 0, 1, 2, ...), F(f,t) is the optical state (luminance in this example) of the displayed image to which the luminance modulation is applied at time t, Sr is a sampling rate of the image-capturing apparatus, and Tr is a shutter speed of the image-capturing apparatus.

By substituting Equation 2 into the above Equation 1, the following Equation 3 is obtained.

$$R(Nr) = A(1 - \alpha)Tr +$$

$$(\alpha A/2\pi f)\{\sin(2\pi f(Nr/Sr+Tr)) - \sin(2\pi f(Nr/Sr))\} \qquad \text{(Equation 3)}$$

where Nr = 0, 1, 2, ...

The first part of Equation 3 indicates the average luminance of the recorded image, and the second part indicates a temporal modulation component to be added to the first part. As indicated in Equation 3, the amplitude and temporal frequency of the luminance variation at each image-captured frame comprise variations determined by luminance modulation components (frequency f and contrast $\alpha$) and intrinsic components (sampling rate Sr and shutter speed Tr) of the video camera in use (image-capturing apparatus).

The sampling rate Sr and the shutter speed Tr are the values determined by the image-capturing apparatus that may be used for image/video piracy. Once these values are determined, only the frequency f and the contrast $\alpha$ have to be set in such a way that the period and amplitude of the basic frequency for R(Nr) corresponds to the values equal or more than the temporal frequency contrast sensitivity of human vision at the luminance of the displayed image.

In this example, the flicker is perceived by the human vision on the recorded image obtained through image-capturing of the modulated display images thereby hampering watching of the recorded image.

Accordingly, by appropriately selecting the frequency f and the contrast $\alpha$ of the luminance modulation so as to satisfy the conditions defined in the previous Section (A-2-1) and the present Section (A-2-2), no flicker is perceived when the display screen is directly watched while the flicker is perceived when the recorded image is watched.

Alternatively, the condition described in the previous section (A-2-1) may be relaxed while holding the condition described in the present section (A-2-2) if a certain degree of the flicker is acceptable for being direct watched. These conditions may be applicable for a case in which the maximum quality of the display images is not required on the condition that watching of the recorded image obtained by image/video piracy can be disturbed.

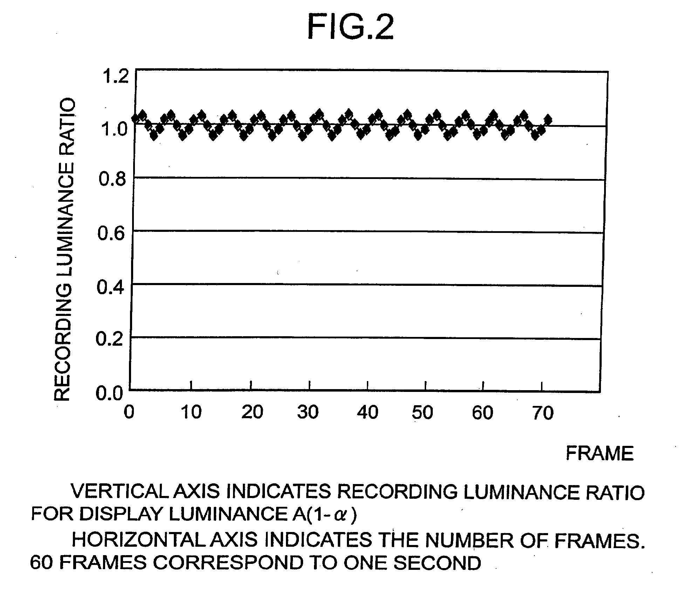

Next, the present embodiment will now be described in detail with specific examples. In the following examples, it is assumed that the recorded image is obtained by image-capturing of the displayed image to which the luminance modulation described above is applied with using a NTSC standard video camera. Fig. 2 shows a variation of recording luminance after the image-capturing when a shutter opening period is set to 1/60 second. The shutter opening period of 1/60 second is a typical value used for an automatic shutter function when the image-capturing is performed in darkness of a movie theater during a movie show.

Fig. 2 indicates that the luminance modulation with a contrast $\alpha$ of 3 % and a base frequency f of 12 Hz is recorded by the video camera. The contrast variation in the recorded image (copy image) corresponds to a region of a higher value than the temporal frequency contrast sensitivity of human vision as shown in Fig. 1. Accordingly, the flicker in the recorded image is perceived by the human vision and the watching of the recorded image is disturbed. That is, the flicker is perceived only by the audience of the recorded image but not by the audience of the displayed image, thereby realizing hampering effect against image/video piracy.

The hampering effect maximizes when the shutter speed and the sampling rate of the image-capturing apparatus being used coincide with the respective values assumed in advance. If a different combination of the shutter speed and the sampling rate is used for the image-capturing, an amount of the flicker in the recorded image may decrease in some case. For example, if the product of f times Tr is set to an integer number in Equation 3, the flicker may be eliminated.

However, a complicate apparatus is required to perform a fine adjustment of the shutter speed and the sampling rate. The fine adjustment may not be required against for a typical case of image/video piracy. Alternatively, it is possible to generate the flicker in the recorded image independent of the shutter speed and/or the sampling rate of the image-capturing apparatus if a type of the luminance modulation (frequency and/or amplitude of the luminance modulation ) is varied with time during a period of the display.

In the above described examples, the sinusoidal waveform is used for generating the luminance modulation. Alternatively, a modulation based on any other form may also be utilized to accomplish the similar effect. If a composite wave/pulse form is used as a base of the modulation, the conditions of the present section (A-2-2) and the previous section (A-2-1) need to be satisfied by at least one of sinusoidal wave components of the composite wave/pulse so as to generate the visible flicker on the recorded image by applying the luminance modulation to the display image while generating no visible flicker to the audience who is directly watching the displayed image. The sinusoidal wave components of the composite wave/pulse may be obtained through spectral analysis such as Fourier transformation performed on the base of modulation (composite wave/pulse). If the maximum image quality is not required for the displayed image that are watched directly by the audience, it may not be necessary to completely satisfy the condition of the previous section (A-2-1).

(A-2-3) KEEPING DISPLAY LUMINANCE UNCHANGED BEFORE AND AFTER LUMINANCE MODULATION

An additional condition will now be described. The condition described herein is one of conditions to be satisfied to alleviate sense of discomfort when the audience is watching the displayed image. When the luminance modulation satisfying the conditions described above is applied to the display image (image to be displayed) so as to accomplish a desired hampering effect, there is a chance to have a display luminance different from that of the original display image due to mismatch between the luminance modulation period and a display period peculiar to the display apparatus in use. That is, the display luminance in one frame may change before and after the luminance modulation application. Here, the display luminance corresponds to an optical state perceived by the audience, and specifically an averaged luminance over a display period of one frame.

Typically, the audience may not notice such display luminance change since the audience has no knowledge of the original display luminance. However, the display luminance change may become an issue in some case. For example, the display luminance change may become a problem when a highly artistic image is displayed.

In such a case, it is desirable to hold the optical state of the display image unchanged in each frame before and after the luminance modulation application. The following equation has to be satisfied in order to maintain the same display luminance.

$$I(Np) = \int_{Np \times Tp}^{(Np+1) \times Tp} F(f,t) \, dt \quad \dots \text{(Equation 4)}$$

where I(Np) is the original display luminance before the luminance modulation application to frame Np at the display apparatus in use. Here, Np = 0, 1, 2, ...., and Tp is a time period of one frame in the display apparatus in use.

The same image as one without the luminance modulation can be displayed if the luminance modulation F (f,t) is designed to satisfy the condition of the present section (A-2-3) as well as the conditions of the previous sections (A-2-1) and (A-2-2). Incidentally, the condition defined by Equation 4 is already satisfied by the specific example described in the section (A-2-1) (the image frequency is set to 24 Hz, the luminance in single frame before the luminance modulation is a constant, and sinusoidal wave of 72 Hz is used for the luminance modulation). According to the specific example, the luminance modulation enabling the hampering effect only applicable for the recorded image may be realized without generating the flicker visible to the audience nor causing any modification of the display image.

(A-3) HUMAN VISUAL CHARACTERISTIC FOR COLOR VARIATION

In one embodiment of the present invention, the focus is placed on human visual characteristic for color variation. In this section, it is described that the similar effect as in the previous embodiment in which the optical state is varied in luminance domain may be realized by varying the optical state in color domain.

The optical state variation may also be realized by varying spectral distribution (color components) while holding the same luminance in the displayed image. For example, when the modulation is performed in such a way that red light of 100 nit and green light of 100 nit are displayed alternatively and its modulation frequency is set to approximately 70 Hz, the human vision can not separate these two colors and perceives only a mixture of these colors. Namely, no color variation is visible to the audience who is directly watching the displayed image.

However, when the displayed image is image-captured by an image-capturing apparatus with a sampling rate of 60 Hz, time periods of the red display and the green display in single frame are recorded differently. Accordingly, it becomes possible to generate a color variation between red and green at a lower variation frequency (10 Hz in the instant example) that is visible only in the recorded image, thereby realizing the hampering effect with utilizing the optical state variation in color domain.

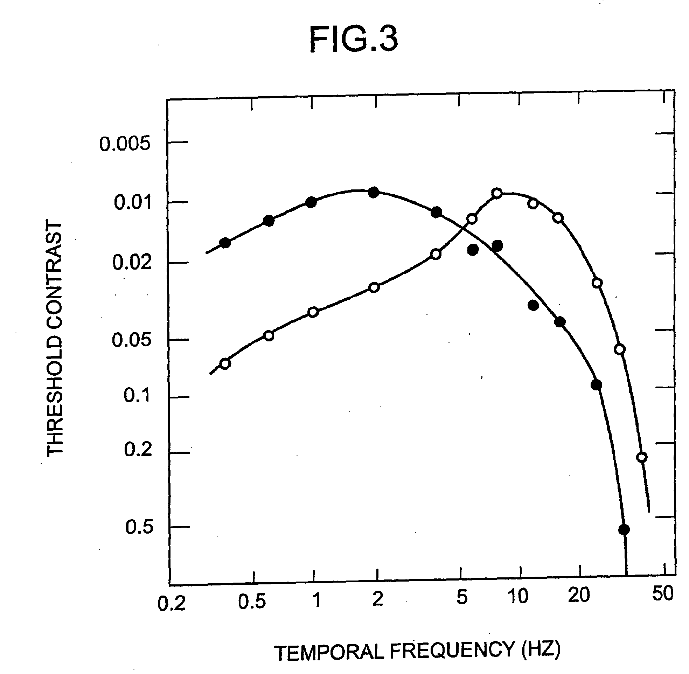

A specific example will now be described. Fig. 3 shows the contrast sensitivity of human vision on the color variation as a function of temporal frequency. In Fig. 3, the upper region beyond a characteristic curve (where the contrast variation is smaller) is a region in which the human vision system can not perceive, and the lower region below the characteristic curve (where the contrast variation is larger) is a region in which the human vision system can perceive.

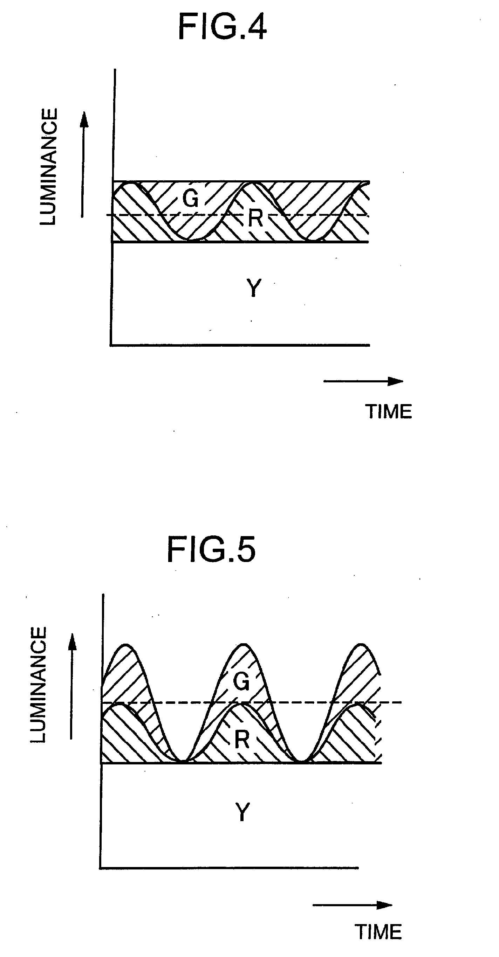

A characteristic curve with symbols ● shown in Fig. 3 indicates sensitivity characteristic when green light (G) and red light (R) are modulated in reverse phase so that the sum of luminance of these two color light is kept constant as shown in Fig. 4. Incidentally, letter Y shown in Fig. 4 indicates yellow light. Fig. 4 indicates how the mixture of green light (G) and red light (R) looks like in a typical case.

When such modulation is applied on the image to be displayed and the modulated image that is being displayed is recorded by an image-capturing apparatus, a variation pattern of color changing from red to green and green to red becomes visible while no luminance (corresponding to the contrast) variation is visible in the recorded image.

Of course, conditions (amplitude and frequency) of the luminance modulation to be applied for each color may be determined similarly as that of the contrast variation described in the previous sections. That is, the luminance modulation conditions for each color are selected so that the selected luminance modulation corresponds to a region of Fig. 3 in which the color variation can not be perceived when the displayed image is directly watched and to another region of Fig. 3 in which the color variation can be perceived when the recorded image obtained through the image-capturing apparatus is watched.

In the present embodiment, the luminance value of a secondary color after the mixture of colors is not necessary to be the same before and after the luminance modulation in a strict sense as far as no hampering effect is perceived during a period when the displayed image is directly watched by the human vision. Obviously, an appropriate condition may be selected for holding the same luminance value before and after the modulation if necessary. The similar rationale as described in the previous sections (A-2-1) to (A-2-3) may be employed to select such conditions.

Another characteristic curve with symbols ○ is shown in Fig. 3. This characteristic curve indicates sensitivity characteristic when green light (G) and red light (R) are varied in the same phase as shown in Fig. 5. In this case, a ratio of color components green light (G) and red light (R) does not change, and only the luminance (contrast) variation without color change is generated. Accordingly, the contrast modulation described in the previous sections may be realized not only by the luminance variation but also by the color variation.

It is observed that the temporal frequency characteristics of two characteristic curves shown in Fig. 3 are different from each other. Fig. 3 indicates that the contrast variation (characteristic curve of symbols ○) is perceived more easily for the human vision than the color variation (characteristic curve of symbols ●) in a higher frequency. That is, the color variation is less visible than the contrast variation in a higher frequency. It means that the optical state variation in color domain is more effective in practice than the optical state variation in contrast domain in a lower frequency. Accordingly, the optical state variation in color domain can be more readily utilized in practical use compared with the contrast variation.

(A-4) OTHER MODULATION METHODS

As mentioned above, desired effects of the present embodiment may be accomplished by the optical state variation in both contrast domain and color domain. In such optical state variation, a period of the luminance modulation to be applied is not necessary to be a constant.

For example, a specific meaning may be assigned to a particular temporal frequency of the luminance modulation so as to provide information relating to the display such as location and date/time of the display. Alternatively, if a specific meaning is assigned to a particular rule of temporal frequency change (for example a sequential order of the change), the information relating to the display may also be provided by analyzing a way of change in the temporal frequency of the luminance modulation. Furthermore, a specific meaning may also be assigned to the contrast (light-dark or color) itself or a rule of the contrast change.

Such information may be provided, for example, by providing a memory that stores the information relating to the display and corresponding types of the luminance modulation (combinations of temporal frequency and contrast), receiving information relating to the display inputted through an input device, and reading out the corresponding type of the luminance modulation based on the inputted information.

Alternatively, the luminance modulation may be applied only at a part (spatial position) of the display image. By utilizing such partial application of the luminance modulation, the information relating to the display such as location and date/time of the display may also be provided. The type of the luminance modulation corresponding to the information relating to the display can be read out by employing the similar system as that of the previous sections.

(A-5) OTHER APPLICATIONS

The luminance modulation satisfying the above modulation conditions may be used to hamper watching of the recorded image obtained through image/video piracy. Alternatively, the technologies according to the embodiments of the present invention may also be used for various other applications. For example, the technologies may be utilized for a method and/or apparatus for superposing an electronic watermark.

(B) SPECIFIC EMBODIMENTS

Next, embodiments utilizing the above described basic principle will now be described. It is only a matter of application style whether the following systems according to the embodiments should be used as a system for a purpose to hamper watching of the recorded image obtained through image/video piracy or a system for a purpose to record an electronic watermark that enables a tracking of image/video piracy. The basic system configuration is the same in both applications.

There are two major types of system that provides the optical state modulation in the display image. The first one is a system utilizing a display apparatus to project images to a screen. The other is a system utilizing a display apparatus of a direct view type.

In both types of system, the following methods of the optical state modulation application may be employed. That are: (1) a method applying the luminance modulation in a light path from the display apparatus to the audience (no luminance modulation is applied in an output light when the light is emitted from a light source); (2) a method applying the luminance modulation on the light source itself or its driving signal to generate the luminance modulation in the output light when the light is emitted from the light source; and (3) a method applying the luminance modulation on an image signal. Obviously, the optical state modulation may be performed either in contrast domain or color domain.

(B-1) EXAMPLES OF PROJECTOR TYPE SYSTEM

(a) FIRST EXAMPLE OF CONFIGURATION

In the present example, a system functions as a luminance modulation application system for applying modulation on the display image in such a way that an optical state variation independent of the original display image becomes visible in the recorded image obtained by image-capturing of the original display image while no hampering effect is visible in the displayed image shown on the screen when the displayed image is directly watched. The system comprises the following apparatuses:

(1) a projector type display apparatus projecting the display images onto the screen; and
(2) an optical state modulation apparatus applying a periodic luminance modulation in temporal domain on the original display image by acting on the projecting light in the projection light path.

The system relates to the method for modulating the optical state of projection light in the light path before the projection light emitted from the light source reaches the audience.

(a-1) SPECIFIC EXAMPLE 1

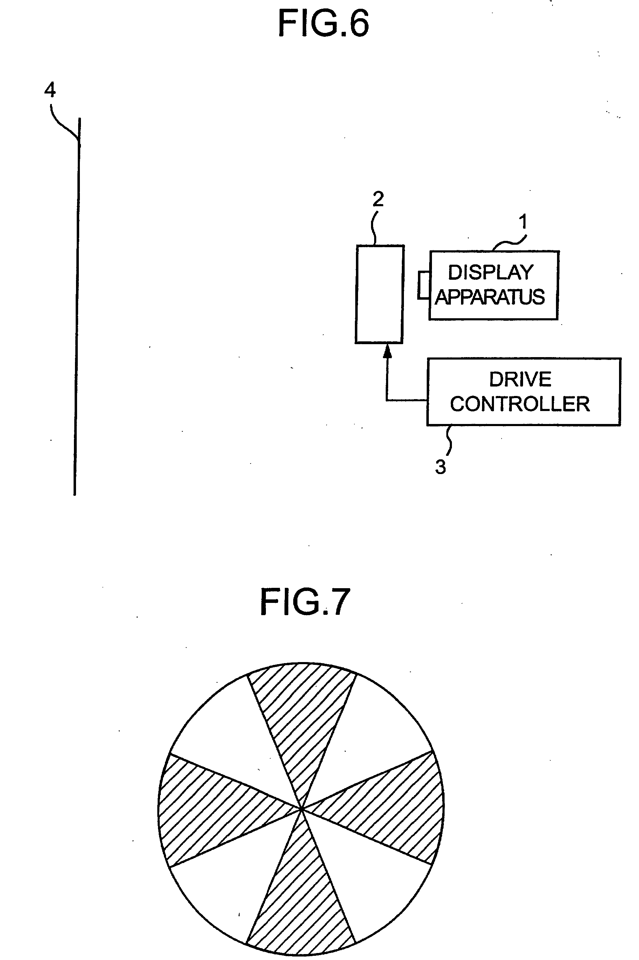

Fig. 6 shows the first specific example of the present system. The system of Fig. 6 is directed to a technique for applying modulation on the projection light in front of a projection lens of a display apparatus 1.

As shown in Fig. 6, the system comprises the display apparatus 1 functioning as a projector, an optical state modulation apparatus 2 applying luminance modulation on the projection light, and a drive controller apparatus 3 driving and controlling the optical state modulation apparatus 2. A screen 4 may be a part of the present system or may be omitted from the present system. All or some of the configuration elements of the present system may be disposed in single body. The system may also be packaged in single body or plural bodies to compose a commercial product. Specifically, the display apparatus 1, the optical state modulation apparatus 2 and the drive controller apparatus 3 may be stored into the separate casings for allowing independent handling. However, in many occasions, these apparatus would be stored in the same casing according to a preferable form of the present system.

The display apparatus 1 has a display unit and performs functions of optically enlarging an image appeared on the display unit and projecting the enlarged image to the screen 4. There are two ways to position the display apparatus 1. One is to position the display apparatus 1 in front of the screen 4 (at audience's side) and the other to position it behind the screen 4 (at back side). In the former way, a light reflected at the screen surface is watched by the audience and a front projection type of the display apparatus is employed. In the latter way, a light transmitted through a translucent screen is watched and a rear projection type of the display apparatus is employed . In the latter way, the translucent screen 4 and the system of the latter way may compose an integral product in most of practical applications.

The display apparatus 1 may comprise a signal processing unit processing image signal, a light source and an optical system for projecting display image onto the screen 4. The display apparatus 1 may be realized with various forms by utilizing or combining various conventional technologies.

For example, the display apparatus 1 may be realized with a movie film projector, a CRT (Cathode Ray Tube) projector, a LCD (Liquid Crystal Display) projector, a LED (Light Emitting Diode Display) projector, a PDP (Plasma Display Panel) projector, a DLP (Digital Light Processing) projector, a FED (Field Emission Display) projector, or a ILA (Image Light Amplifier) projector. The DLP projector is a projector utilizing digital micro-mirror devices as image generating devices.

The optical state modulation apparatus 2 is provided to perform the luminance modulation on the optical state of the projection light (display image) outputted from the display apparatus 1. Accordingly, it is preferable to provide a mechanism in the optical state modulation apparatus 2 so as to control increase and decrease of the optical state of the projection light projected from the display apparatus 1 to the screen 4. Such a mechanism may be realized with various ways.

One of such ways is to use a rotation filter 5 as an optical state modulation device of the optical state modulation apparatus 2. The rotation filter 5, as shown in Fig. 7, creates density variation as a rotational angle changes. A desired luminance modulation can be accomplished by connecting the rotation filter 5 with a rotation motor 6 to rotate the rotation filter 5 with a constant speed whereby increasing/decreasing the luminance of light transmitted through the rotation filter 5 according to a density pattern provided thereon. The density pattern formed along a circumferential direction of the rotation filter 5 may be in a form of sinusoidal waveform variation or in a form in which a transparent part and a non-transparent part are alternated. The rotation speed of the rotation motor 6 may be a constant or varied so as to accomplish the optical state modulation satisfying the above described conditions.

Alternatively, as the optical state modulation device of the optical state modulation apparatus 2, various shutter devices such as mechanical shutter or LCD shutter and a polarization device such as polarization filter may be used. Any of these devices can generate the luminance modulation of the optical state and achieve similar effects as in the case of utilizing the rotation filter 5.

Although the optical state modulation apparatus 2 is disposed at immediately after the projection lens in the example shown in Fig. 6, a position of the optical state modulation apparatus 2 is not limited to that of the example. The optical state modulation apparatus 2 may be disposed at immediately after the light source, or, in front or back of an display image generation device such as the liquid crystal panel and any other arbitrary position as long as such position is located in a light path before the image light outputted from the light source has reached to the audience. Obviously, the luminance modulation may be performed wherever the optical state modulation apparatus 2 is disposed. In the example shown in Fig. 6, there is such an advantage of that the optical state modulation apparatus 2 can be easily attached to an existing display apparatus 1.

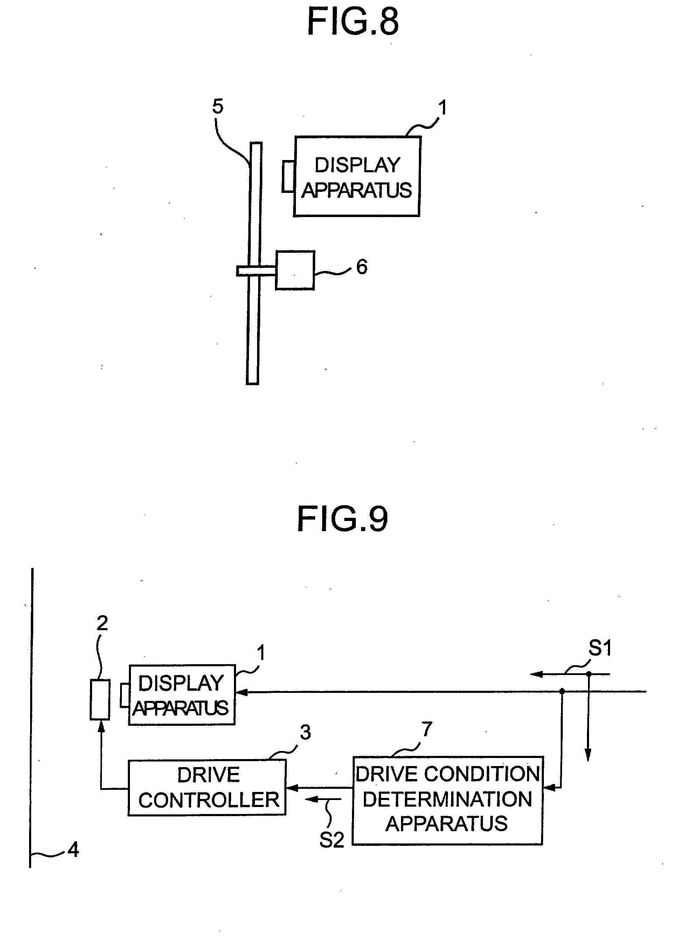

The drive controller apparatus 3 is an apparatus to drive and control the optical state modulation apparatus 2 so as to satisfy the modulation conditions defined in the above cited section (A-2). Specific processing steps executed in the drive controller apparatus 3 may differ depending on a detail specification of the optical state modulation apparatus 2, the object to be controlled. For example, in the example shown in Fig. 8, the drive controller apparatus 3 may be provided with a servo function unit and control rotational motion of the rotation motor 6 to adjust a rotational speed using the servo function unit. Specifically, the drive controller apparatus 3 detects a rotational speed of the rotation motor 6, compares the detected rotational speed with a preset target value of the rotational speed, and controls the rotation motor 6 so as to detect the same rotational speed as the preset target value. The preset target value of the rotational speed, that is required for controlling with the drive controller apparatus 3, may be determined in advance in view of the density pattern of the rotation filter 5. The preset target value is stored in a memory (storage unit) that may be disposed in the drive controller apparatus 3.

When the optical state modulation apparatus 2 comprises the mechanical shutter or the liquid crystal shutter, opening and closing of the shutter are controlled. For the mechanical shutter, the control of opening and closing is performed with the drive controller apparatus 3 by controlling speed and/or amount of movement of a portion that shield the projection light. For the liquid crystal shutter, the control of opening and closing is performed with the drive controller apparatus 3 by controlling alignment change of liquid crystal molecules. The similar mechanism as in the rotation filter described above may be used if the mechanical shutter comprises a rotary disc having a notch or small hole therein for light transmission.

When the polarization device (polarization filter) is used in the optical state modulation apparatus 2, it is preferable to control a relation of polarization angles between a pair of the polarization filters that are facing to each other with the drive controller apparatus 3 to apply the luminance modulation in the optical state which is eventually perceived by the audience. Alternatively, one of the pair of the polarization filters may be disposed in audience's side.

That is, a pair of glasses with the polarization filter may be worn by the audience.

(a-2) SPECIFIC EXAMPLE 2

Fig. 9 shows a specific example 2 of the present system. The system of Fig. 9 is a variant of the specific example 1, and includes a function to change a modulation method according to contents of images in addition to the functions provided for the specific example 1. Although a method of modulation is changed according to the image contents in the present example, the method of modulation may also be controlled independent of the image contents (e.g. based on the lapse of time) in an alternative form.

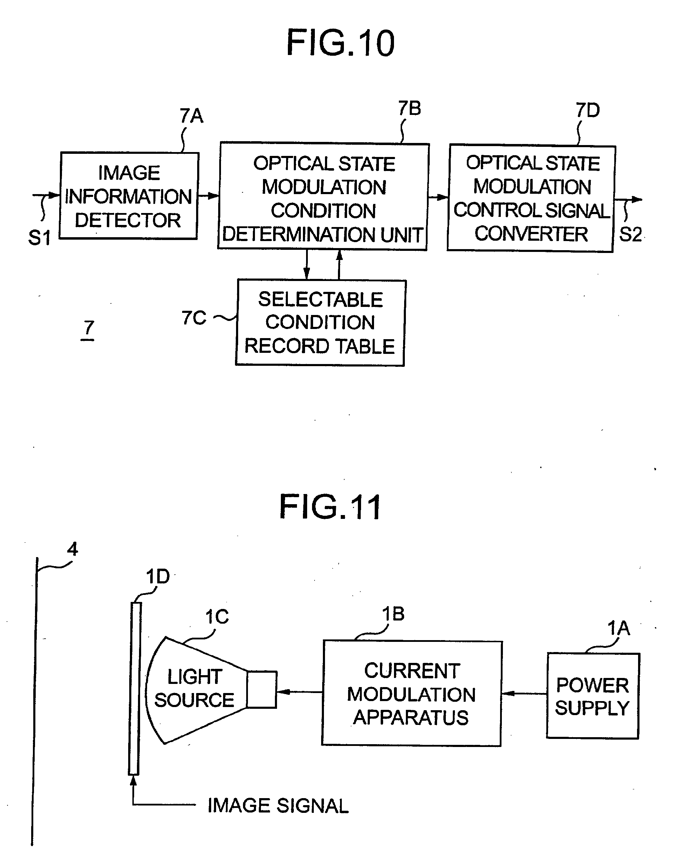

In Fig. 9, the same numerals as that of Fig. 6 are used for the corresponding parts of the figures. Detail explanations regarding the display apparatus 1, the optical state modulation apparatus 2 and the drive controller apparatus 3 are not provided since they have the same functions and constructions as in the specific example 1. One of features unique to the system of Fig. 9 is a drive condition determination apparatus 7. The drive condition determination apparatus 7 functions to detect a luminance signal or color signal from an image signal S1 and change a drive condition accordingly. Fig. 10 shows an example of construction of the drive condition determination apparatus 7.

The drive condition determination apparatus 7 shown in Fig. 10 comprises an image information detector 7A, an optical state modulation condition determination unit 7B, a selectable condition record table unit 7C and an optical state modulation control signal converter 7D.

The image information detector 7A is provided to detect a desired image information from the image signal S1. The desired image information may be information such as an average luminance value (or color value) for the overall area of the display screen, an average luminance value (or color value) in a particular portion of the display screen, an integrated value calculated with a preset weighing on a luminance distribution of the display image and a color distribution. In the example shown in Fig. 9, the image information detector 7A accepts an input of the image signal S1 that is provide to the display apparatus 1. However, the present embodiment is not limited only to such configuration. Alternatively, when an image displayed on the display apparatus 1 is image-captured by an image-capturing apparatus such as a video camera, an image signal outputted from the image-capturing apparatus may be accepted as the input.

The optical state modulation condition determination unit 7B (referred as determination unit 7B hereafter) is provided to determine the modulation condition based on the detected image information. Here, the optical state (luminance or color) referenced by the determination unit 7B may be one related to the overall area of the display screen or to a partial area thereof at which the luminance modulation is applied.

The determination unit 7B accesses the selectable condition record table unit 7C and, based on the detected optical state (luminance or color), selects an appropriate modulation conditions (e.g. amplitude, frequency, waveform) from the selectable conditions that enable generation of the visible effect described above when the recorded image obtained through image/video piracy is watched. Applicable criteria of the selection may be related to, for example, whether an amplitude of the optical state variation visible on the recorded image exceeds a preset value or not, and/ or, whether a temporal change of the optical state variation visible on the recorded image is in a frequency region with which the human vision can easily perceived (e.g. 1-20 Hz) or not. Alternatively, other criteria of the selection may also be applicable.

The selectable condition record table unit 7C is provided to record plural combinations of the modulation conditions so that the determination unit 7B can select an appropriate combination of the modulation conditions. Here, it is assumed that such combinations of the modulation conditions, that enable generation of the visual effect on the recorded image as described above when the recorded image is obtained through image/video piracy, are calculated or obtained in advance.

The optical state modulation control signal converter 7D is provided to convert the selected modulation condition to a specific drive information. The drive information is formatted corresponding to a specification of the optical state modulation apparatus 2 and/or a control method of the drive controller apparatus 3. For example, the modulation condition is converted to a target value of the rotational speed when the rotational filter 5 is used as in the specific example 1. The converted drive information is supplied to the drive controller apparatus 3 as an optical state control signal S2. Obviously, the optical state modulation control converter 7D stores a conversion table and/or a conversion equation for converting the modulation condition to the preset drive information, and performs the conversion by referencing the conversion table and/or equation.

(b) SECOND EXAMPLE OF CONFIGURATION

In the present example, the followings are provided as a luminance modulation application system that enables to apply modulation on a display image in such a way that luminance variation, which is independent of original display image on a screen and does not hamper direct watching thereof, appears on a recorded image obtained through image-capturing of the original display image. The system comprises:

(1) a projection type display apparatus projecting display images onto a screen, and
(2) an optical state modulation apparatus controlling a light source of the display apparatus so as to apply a periodic luminance modulation of temporal domain on original images.

The present system relates to the method of controlling the light source itself to output projection light in which the luminance is modulated.

(b-1) SPECIFIC EXAMPLE 1

Fig. 11 shows specific example 1 of the present system. The system of Fig. 11 is directed to a technique for applying the luminance modulation on the projection light by modulating emission of the light source itself. In this example, the display apparatus is of a non self-emitting type. The display apparatus of a non self-emitting type may be realized in various types of projector such as a film movie projector, a liquid crystal display projector, a DLP type projector and an ILA type projector.

In the example of Fig. 11, a current modulation apparatus 1B corresponds to the optical state modulation apparatus of the present embodiment. The current modulation apparatus 1B controls increase and decrease of the luminance of light outputted from a light source 1C by modulating a drive current provided from a power supply 1A to the light source 1C based on a signal having a waveform with a preset amplitude and frequency. Here, the signal's waveform is assumed to satisfy the modulation conditions defined in the previous section (A-2).

The light source's light, in which the luminance is modulated, is projected onto the screen 4 via an image generation unit 1D. As a result, the modulation is applied on the display image and the modulated display image is projected onto the screen so as to generate the above cited visual effect in the recorded images when the recorded image is obtained by image/video piracy of the modulated display image. The image generation unit 1D generates the display image by reflecting or letting pass through the light from the light source. The image generation unit 1D may be realized by implementing various devices such as a movie film, a liquid crystal filter and a DMD device.

In the example of Fig. 11, it is assumed that information relating to the waveform of signal used for the luminance modulation in the current modulation apparatus 1B is recorded in advance, for example, in a memory. Alternatively, the modulation condition (e.g. amplitude, frequency, waveform) to be used in the luminance modulation may be determined based on information relating to the display images in a similar way as the specific example 2 shown in Fig. 9.

Although the figure illustrate the system in which the drive current supplied to the light source 1C is controlled, the present embodiment is not limited thereto. Alternatively, the similar control technique may be used in a system in which a drive voltage is controlled. In such system, a voltage modulation apparatus may be used for performing the similar control on the drive voltage that is supplied from the power supply 1A. Furthermore, although the current modulation apparatus 1B is disposed inside the display apparatus 1 in the example of the figure, the present embodiment is not limited thereto. Alternatively, the current modulation apparatus 1B may also be disposed outside the display apparatus 1.

The above described system may also be applicable to a system of rear-projection type as well as the system of front projection type.

(b-2) SPECIFIC EXAMPLE 2

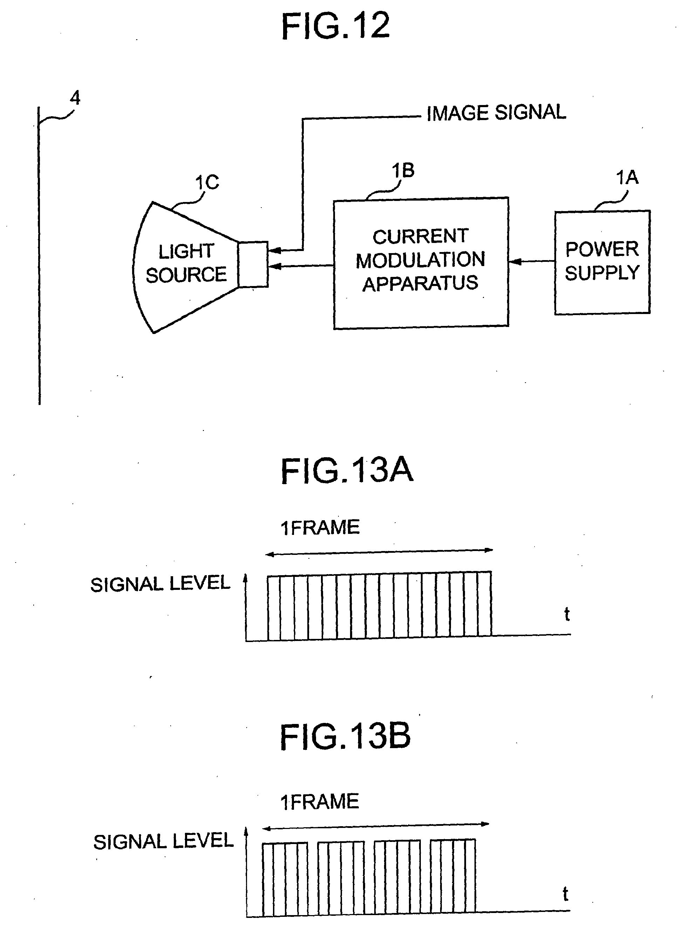

Fig. 12 shows specific example 2 of the present system. The system of Fig. 12 is directed to a technique for applying the luminance modulation on the projection light by modulating emission of the light source itself. In this example, the display apparatus is of a self-emitting type. The same numerals are used for corresponding elements shown in Fig. 11 and Fig. 12. The display apparatus of a self-emitting type may be realized in various types of projectors such as a CRT projector, a LED projector, a plasma display projector and a FED type projector.

In the present system, being different from the system in the specific example 1, the image signal is sent to the light source 1C. Accordingly, the display image has been generated in light just outputted from the light source 1C.

The same current modulation apparatus 1B as that of the specific example 1 may be used in the present system. Also, in the present system, the luminance modulation independent of the image signal may be applied on the display images by controlling the drive current supplied to the light source 1C with the current modulation apparatus 1B.

Obviously, the similar control technique may also be used in a system in which a drive voltage is controlled. Furthermore, although the current modulation apparatus 1B is disposed inside the display apparatus 1 in the example of the figure, the current modulation apparatus 1B may also be disposed outside the display apparatus 1.

The above described system may also be applicable to a system of rear-projection type as well as the system of front projection type.

(b-3) SPECIFIC EXAMPLE 3

Specific example 3 is a variant of the specific examples shown in Fig. 11 and Fig. 12. The same system configurations as in the previous specific examples may also be employed in the present example.

The present specific example is directed to a system including the display apparatus that utilizes a PWM (Pulse Width Modulation) method to control emission of the light source. Such a type of the display apparatus may be realized with, for example, a DLP type projector, a PDP type projector and the like. The display apparatus of this type generates a gray scale (tone) by accumulating a plurality of emission and non-emission in one frame. Accordingly, the above described visual effect may be realized by applying the modulation in addition to such emission sequence.

The gray scale representation of the PWM method is performed in the following way. For example, the gray scale may be represented by a drive pattern (a sequence pattern of pulses) shown in Fig. 13A in case of sixteen gray scales are used. As shown in Fig. 13B, a non-emitting period may be added in a periodic manner in addition to the original drive pattern (Fig. 13A) in the present specific example. Obviously, the period and duration of the non-emitting period may be determined to satisfy the modulation condition defined in the section (A-2).

(c) THIRD EXAMPLE OF CONFIGURATION

In the present example, the followings are provided as a luminance modulation application system that enables to apply modulation on display images in such a way that luminance variation, which is independent of original display image on a screen and does not hamper direct watching thereof, appears on recorded images obtained through image-capturing of the original display image. The system comprises:

(1) a projection type display apparatus projecting display images onto a screen, and
(2) an optical state modulation apparatus controlling an image signal of the display apparatus so as to apply a periodic luminance modulation of temporal domain on original images.

The present system relates to the method of modulating the image signal, by which the display images are generated, in advance.

(c-1) SPECIFIC EXAMPLE 1

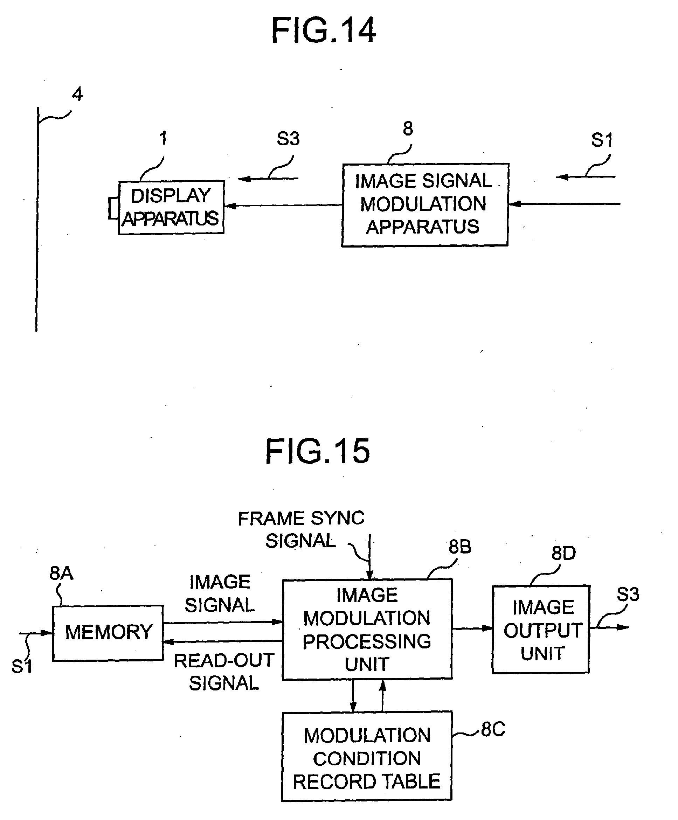

Fig. 14 shows the first specific example 1 of the present system. The system of Fig. 14 is directed to a technique of applying the modulation on the image signal to be inputted to the display apparatus 1. In the system of Fig. 14, an image signal modulation apparatus 8 functions to realize such method. Although the image signal modulation apparatus 8 is disposed outside the display apparatus 1 in Fig. 14, the image signal modulation apparatus 8 may also be disposed inside the display apparatus 1. The display apparatus 1 may be of the non self-emitting type or the self-emitting type.

There are various ways to apply the luminance modulation on the image signal. In the present specific example, one frame is copied to create a plurality of frames with different optical states from each other, and the plurality of frames are outputted within a display period of the one frame. The unit 'frame' represents a unit used in the display operation in the display apparatus, and may be called as 'field' or 'shot' or the like depending on the display apparatus in use.

For example, if the image signal for two frames are to generate from that of one frame, the generated image signal is outputted at a frame rate twice as fast as a frame rate of input. Furthermore, the luminance of these image signals is set to different value from each other when the image signal of one frame is converted to that of two frames.

The luminance modulation applied in the present specific example is determined so as to satisfy the modulation condition described in the section (A-2). Accordingly, watching of recorded images obtained by image-capturing of the displayed images is hampered while no hampering effect is presented when the displayed image is directly watched.

Fig. 15 shows an configuration example of the image signal modulation apparatus 8 performing the above described modulation scheme. The image signal modulation apparatus 8 of Fig. 15 comprises a memory 8A, an image modulation processing unit 8B, a modulation condition record table unit 8C and an image output unit 8D.

The memory 8A is a unit to temporary store the image signal that is inputted. The image modulation processing unit 8B is a unit to perform a processing step for repeatedly reading out a frame image data a plurality of times (e.g. twice) from the memory 8A and a processing step for applying a preset luminance modulation on the read-out frame image data during a time period between receptions of a frame sync signal and the subsequent frame sync signal.

The luminance-modulated frame image data is immediately outputted to the image output unit 8D. Accordingly, the frame image data is outputted a plurality of times during a display period of one frame.

The image modulation processing unit 8B performs the above described processing steps after reading out of conditions of the luminance modulation from the modulation condition record table unit 8C. The repetition number of the read-out operation from the memory 8A is determined in accordance with the conditions of the luminance modulation. Here, it is assumed that all the required modulation conditions are stored in the modulation condition record table unit 8C in advance.

The modulation condition record table unit 8C may be replaced with the selectable condition record table unit shown in Fig. 10 when the system includes the image modulation processing unit 8B that also performs the processing step to determine the modulation condition based on the image signal.

The image output unit 8D is a unit to accept an input of the image signal from the image modulation processing unit 8B and outputs the input signal or a processed input signal to the display apparatus 1.

Accordingly, a plurality of the frame image data having the same image but different display luminance is inputted to the display apparatus 1 during the display period of one frame.

In the above described examples, the output frame rate of the image modulation processing unit 8B is assumed to be twice as high as the input frame rate. However, in the present embodiment, the output frame rate is not limited to an integral multiplication of the input frame rate. For example, the input frame rate may be multiplied by any real number such as 1.5. When 1.5 is used for the multiplication, a display period for each of the generated frames may vary. Alternatively, it is possible to use a sequence in which two of the newly generated frames are outputted in the original display period for one frame and three of the newly generated frames are outputted for the other frame.

(B-2) EXAMPLES OF DIRECT VIEW TYPE SYSTEM

According to an embodiment in accordance with the present invention, the similar control technique as in the projection type system may be employed in a direct view type system. In the following explanation, parts different from the projection type system will now be focused.

(a) FIRST EXAMPLE OF CONFIGURATION

In the present example, the followings are provided as a luminance modulation application system that enables to apply modulation on display images in such a way that luminance variation, which is independent of original display image on a screen and does not hamper direct watching thereof, appears on recorded images obtained through image-capturing of the original display image. The system comprises:

(1) a direct view type display apparatus displaying display images on a display screen, and
(2) an optical state modulation apparatus generating effect on display light so as to apply a periodic luminance modulation of temporal domain on original display image.

The present system relates to the method of modulating the optical state in a light path from the light source to audience. In many of specific examples which utilize the direct view type display apparatus, the optical state modulation is applied in the light path from the display screen (a screen on which the display images are displayed) to the audience.

(a-1) SPECIFIC EXAMPLE 1

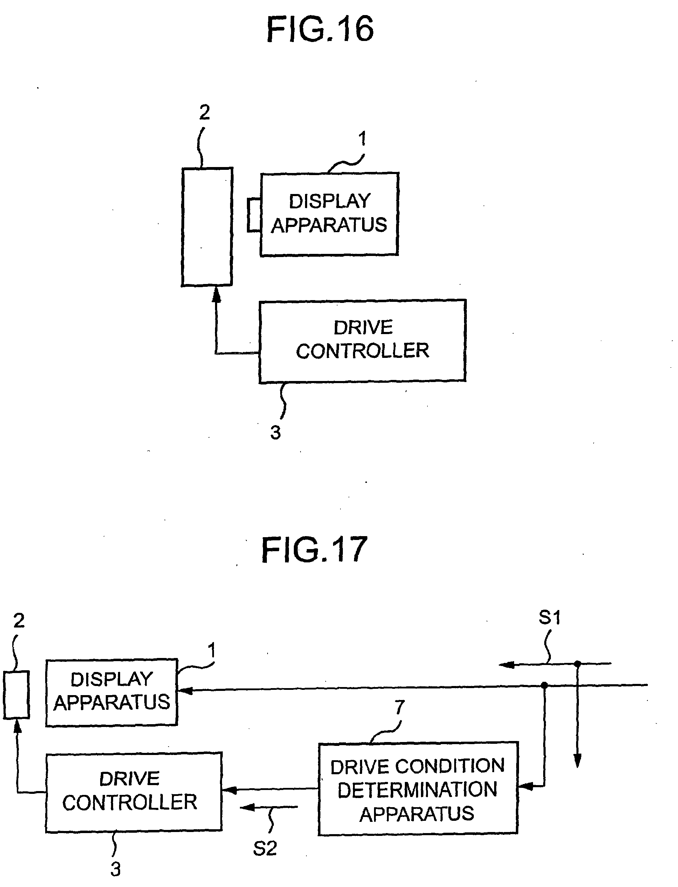

Fig. 16 shows specific example 1 of the present system. Fig. 16 shows a construction corresponding to that of Fig. 6 except the screen 4. No optical system for the projection is required in the display apparatus 1 used in the present example.

The display apparatus 1 may be realized with a CRT (Cathode Ray Tube) display, or a flat panel display such as a LCD panel, a PDP panel, a FED (Field Emission Display) panel and an EL (Electro-Luminescence) display. Alternatively, the display apparatus 1 may include a head mounted display (visor type display).

An optical state modulation apparatus 2 may be realized by the mechanical filter shown in Fig. 8, a mechanical shutter, a liquid crystal shutter, a polarization device such as polarization filter, or other optical filter may be used. If the optical state modulation apparatus 2 is disposed outside the display apparatus 1 as shown in Fig. 16, the liquid crystal shutter or the optical filter may be utilized in many cases. In Fig. 16, the display apparatus 1 and the optical state modulation apparatus 2 are shown as two independent apparatuses. However, the present embodiment is not limited to such construction, and these two apparatuses may be disposed into the same casing to form a single body.

Alternatively, when the display apparatus 1 comprises an image generation device and a light source, the optical state modulation apparatus 2 may be disposed at a point between the light source and the image generating device. Even with this configuration, the display images in which the luminance is modulated can be presented to the audience.

The same drive controller apparatus 3 as that of Fig. 6 may be used in the present example. As described above, different control sequences may be employed for the drive controller apparatus 3 depending on a type of the optical state modulation apparatus 2.

(a-2) SPECIFIC EXAMPLE 2

Fig. 17 shows specific example 2 of the present system. Fig. 17 shows a construction corresponding to that of Fig. 9 except the screen 4. No optical system for the projection is required in the display apparatus 1 used in the present example. In the present example, the same construction comprising the display apparatus 1, the optical state modulation apparatus 2 and the drive controller apparatus 3 as that of the specific example 1 may be used. Furthermore, the same apparatus described with Fig. 10 may be used as the drive condition determination apparatus 7 in the present example.

(b) SECOND EXAMPLE OF CONFIGURATION

In the present example, the followings are provided as a luminance modulation application system that enables to apply modulation on display images in such a way that luminance variation, which is independent of original display image on a screen and does not hamper direct watching thereof, appears on recorded images obtained through image-capturing of the original display image. The system comprises:

(1) a direct view type display apparatus displaying display images on a display screen, and
(2) an optical state modulation apparatus controlling a light source of the display apparatus so as to apply a periodic luminance modulation of temporal domain on original display image.

The present system relates to the method of outputting the display light in which the luminance is modulated by controlling the light source.

(b-1) SPECIFIC EXAMPLE 1

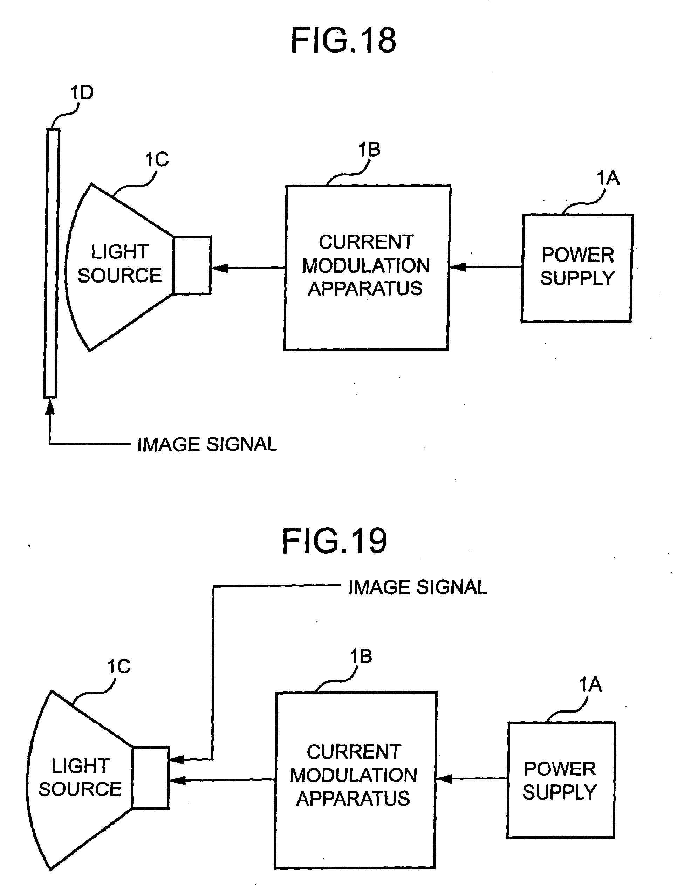

Fig. 18 shows specific example 1 of the present system. Fig. 18 shows a construction corresponding to that of Fig. 11 except the screen 4. No optical system for the projection is required in the display apparatus 1 used in the present example.

The system is directed to a technique for modulating emission of the light source used for a non self-emitting type display apparatus. The display apparatus 1 may be realized with various display apparatuses such as the LCD panel display and the DLP display.

Also, in the example shown in Fig. 18, the current modulation apparatus 1B corresponds to the optical state modulation apparatus of the present embodiment. Although a drive current for the light source is modulated in Fig. 18, the present embodiment is not limited thereto. Alternatively, a drive voltage for the light source may also be modulated.

(b-2) SPECIFIC EXAMPLE 2

Fig. 19 shows specific example 2 of the present system. Fig. 19 shows a construction corresponding to that of Fig. 12 except the screen 4. No optical system for the projection is required in the display apparatus 1 used in the present example.

The system is directed to a technique for modulating emission of the light source used for a self-emitting type display apparatus. The display apparatus 1 may be realized with various display apparatuses such as the CRT display, the PDP display, the FED display and the EL display. Alternatively, the display apparatus 1 may include a head mounted display (visor type display).

Also, in the example shown in Fig. 19, the current modulation apparatus 1B corresponds to the optical state modulation apparatus of the present embodiment. Although a drive current for the light source is modulated in Fig. 19, the present embodiment is not limited thereto. Alternatively, a drive voltage for the light source may also be modulated.

(b-3) SPECIFIC EXAMPLE 3

The present example can be applied on the display apparatus utilizing the PWM method for controlling the emission of the light source as in the DLP display or the PDP display. That is, the present example is directed to a technique of adding the non-emission period in the drive pulse as shown in Fig. 13.

(c) THIRD EXAMPLE OF CONFIGURATION

In the present example, the followings are provided as a luminance modulation application system that enables to apply modulation on display images in such a way that luminance variation, which is independent of original display image on a screen and does not hamper direct watching thereof, appears on recorded images obtained through image-capturing of the original display image. The system comprises:

(1) a direct view type display apparatus displaying display images on a display screen, and
(2) an optical state modulation apparatus controlling an image signal of the display apparatus so as to apply a periodic luminance modulation of temporal domain on original display image.

The present system relates to the method of modulating the image signal, by which the display images are generated, in advance.

(c-1) SPECIFIC EXAMPLE 1

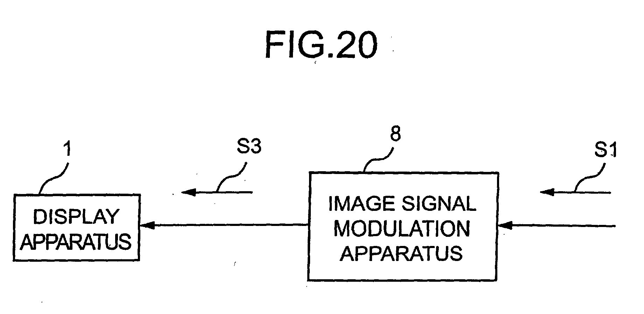

Fig. 20 shows specific example 1 of the present system. Fig. 20 shows a construction corresponding to that of Fig. 14 except the screen 4. No optical system for the projection is required in the display apparatus 1 used in the present example.
In the present example, the display apparatus 1 may be of the non self-emitting type display or the self-emitting type display. Furthermore, the display apparatus 1 may also include a head mounted display (visor type display). Various ways for modulating the image signal may be employed in the present example. The image signal modulation apparatus 8 having a construction shown in Fig. 15 may be used when a plurality of frames, that are created from the single frame so as to have different optical states from each other, are outputted within a display period of single frame. Control sequences, similar to that of the examples utilizing the above described projection type systems, may be applied for the control sequences of the image signal modulation apparatus 8.

(C) APPLICATION FOR IMAGE-CAPTURING PREVENTION SYSTEM

According to an image-capturing prevention system utilizing the above described luminance modulation application system, both the original display image and an optical image pattern (a pattern of the optical state variation), that enables to prevent viewing of the recorded image at replay operation, are displayed by using visible light thereby making it difficult to separately record the original display image and the optical image pattern.
Furthermore, according to the modulation technologies described above, the original state of the display image can be held unchanged in color and luminance even after the application of the above described modulation on the original display image.
Furthermore, according to the modulation technologies described above, an effective prevention technology against image/video piracy can be realized since an optical image pattern (a pattern of optical state variation) that prevents the watching of the recorded image is inseparably recorded as described above.

(D) APPLICATION FOR ELECTRONIC WATERMARKING SYSTEM

According to an electronic watermarking system utilizing the above described luminance modulation application system, both the original display image and an optical image pattern (a pattern of the optical state variation), that becomes visible when the recorded image is watched at replay operation, are displayed by using visible light thereby making it difficult to separately record the original display image and the optical image pattern.
Furthermore, according to the modulation technologies described above, the original state of the display image can be held unchanged in color and luminance even after the application of the above described modulation on the original display image.
Furthermore, according to the modulation technologies described above, an effective prevention technology against image/video piracy can be realized since an optical image pattern (a pattern of optical state variation) that can be used as an electronic watermark is inseparably recorded as described above.
An optical state modulation method has been described. The method comprises a step of periodically modulating luminance of an original display image in temporal domain so as to present an optical state variation, which is independent of the original display image and does not hamper direct watching thereof, on a recorded image obtained through image-capturing of the original display image.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

**Claims**

1. An optical state modulation method comprising:

   periodically modulating luminance of an original display image in temporal domain so as to generate an optical state variation on a recorded image that is obtained by image-capturing of the modulated display image,
   said optical state variation being independent of said original display image and generating no hampering effect when said displayed image is directly watched.

2. The optical state modulation method according to claim 1, wherein,
   when said luminance modulation is performed based on a sinusoidal waveform, an amplitude and frequency of said sinusoidal waveform are determined to satisfy a first condition,
   said first condition being that an amplitude and frequency of said optical state variation in each frame of said recorded image obtained by an image-capturing apparatus correspond to the value equal or more than a temporal frequency contrast sensitivity of human vision determined at the luminance of said original display image.

3. The optical state modulation method according to claim 2, wherein,
   in addition to said first condition, the amplitude of said sinusoidal waveform is determined to satisfy a second condition,
   said second condition being that the amplitude of said luminance modulation is equal or less than an amplitude that is obtained from said temporal frequency contrast sensitivity of human vision by setting a frequency component thereof to the frequency of said sinusoidal waveform determined in claim 2 for the luminance of said original display image.

4. The optical state modulation method according to claim 1, wherein,
   when said luminance modulation is performed based on a composite waveform, an amplitude and frequency of at least one of sinusoidal wave components composing said composite waveform are determined to satisfy a first condition,
   said first condition being that an amplitude and frequency of said optical state variation in each frame of said recorded image obtained by an image-capturing apparatus correspond to the value equal or more than a temporal frequency contrast sensitivity of human vision determined at the luminance of said original display image.

5. The optical state modulation method according to claim 4, wherein,
   in addition to said first condition, the amplitude of said at least one of sinusoidal wave components is determined to satisfy a second condition,
   said second condition being that the amplitude of said luminance modulation is equal or less than an amplitude that is obtained from said temporal frequency contrast sensitivity of human vision by setting a frequency component thereof to the frequency of said at least one of sinusoidal wave components determined in claim 4 at the luminance of said original display image.

6. The optical state modulation method according to claim 1, wherein
   said luminance modulation is performed by applying different types of luminance modulation on corresponding spatial positions of said original display image.

7. The optical state modulation method according to claim 1, wherein
   said luminance modulation is performed by applying different types of luminance modulation on corresponding time periods.

8. The optical state modulation method according to claim 1, wherein
said luminance modulation is performed so as to hold a same display luminance in each frame before and after said luminance modulation, said display luminance being a luminance perceived by a audience.

9. The optical state modulation method according to claim 1, wherein
said optical state variation appeared on said recorded image is a variation in color domain.

10. An optical state modulation application system comprising:

a projection type display apparatus projecting a display image onto a screen, and
an optical state modulation apparatus acting on a projection light in an projection light path to apply a periodic luminance modulation in temporal domain on an original display image, wherein
the luminance of said original display image is modulated to generate an optical state variation on a recorded image obtained through image-capturing of the modulated display image,
said optical state variation being independent of said original display image and generating no hampering effect when said modulated display image displayed on said screen is directly watched.

11. An optical state modulation application system comprising:

a projection type display apparatus projecting a display image onto a screen, and
an optical state modulation apparatus controlling a light source of said display apparatus to apply a periodic luminance modulation in temporal domain to an original display image, wherein
the luminance of said original display image is modulated to generate an optical state variation on a recorded image obtained through image-capturing of the modulated display image,
said optical state variation being independent of said original display image and generating no hampering effect when said modulated display image displayed on said screen is directly watched.

12. An optical state modulation application system comprising:

a projection type display apparatus projecting a display image onto a screen, and
an optical state modulation apparatus controlling an image signal of said display apparatus to apply a periodic luminance modulation in temporal domain on an original display image, wherein
the luminance of said original display image is modulated to generate an optical state variation on a recorded image obtained through image-capturing of the modulated display image,
said optical state variation being independent of said original display image and generating no hampering effect when said modulated display image displayed on said screen is directly watched.

13. An optical state modulation application system comprising:

a direct view type display apparatus displaying a display image onto a display screen, and
an optical state modulation apparatus generating an effect on a display light to apply a periodic luminance modulation in temporal domain on an original display image, wherein
the luminance of said original display image is modulated to generate an optical state variation on a recorded image obtained through image-capturing of the modulated display image,
said optical state variation being independent of said original display image and generating no hampering effect when said modulated display image displayed on said display screen is directly watched.

14. An optical state modulation application system comprising:

a direct view type display apparatus displaying a display image onto a display screen, and
an optical state modulation apparatus controlling a light source of said display apparatus to apply a periodic luminance modulation in temporal domain on an original display image, wherein
the luminance of said original display image is modulated to generate an optical state variation on a recorded image obtained through image-capturing of the modulated display image,
said optical state variation being independent of said original display image and generating no hampering effect when said modulated display image displayed on said display screen is directly watched.

15. An optical state modulation application system comprising:

a direct view type display apparatus displaying a display image onto a display screen, and
an optical state modulation apparatus controlling an image signal of said display apparatus to apply a periodic luminance modulation in temporal domain on an original display image, wherein
the luminance of said original display image is modulated to generate an optical state variation on a recorded image obtained through image-capturing of the modulated display image,
said optical state variation being independent of said original display image and generating no hampering effect when said modulated display image displayed on said display screen is directly watched.

**16.** An optical state modulation apparatus of a luminance modulation application system, wherein:

a periodic luminance modulation in temporal domain is applied to a projection light projected from a projection type display apparatus to generate an optical state variation on a recorded image that is obtained by image-capturing of a displayed image,
said displayed image being an image displayed on a screen to which the modulated projection light is projected,
said optical state variation being independent of an original display image and generating no hampering effect when said displayed image is directly watched.

**17.** An optical state modulation apparatus of a luminance modulation application system, wherein:

a periodic luminance modulation in temporal domain is applied to a light source of a projection type display apparatus to generate an optical state variation on a recorded image that is obtained by image-capturing of a displayed image,
said displayed image being an image displayed on a screen to which a projection light from the modulated light source is projected,
said optical state variation being independent of an original display image and generating no hampering effect when said displayed image is directly watched.

**18.** An optical state modulation apparatus of a luminance modulation application system, wherein:

a periodic luminance modulation in temporal domain is applied to an image signal of a projection type display apparatus to generate an optical state variation on a recorded image that is obtained by image-capturing of a displayed image,
said displayed image being an image displayed on a screen to which a projection light according to the modulated image signal is projected,
said optical state variation being independent of an original display image and generating no hampering effect when said displayed image is directly watched.

**19.** An optical state modulation apparatus of a luminance modulation application system, wherein:

a periodic luminance modulation in temporal domain is applied to a display light of a direct view type display apparatus to generate an optical state variation on a recorded image that is obtained by image-capturing of a displayed image,
said displayed image being an image of the modulated display light of said direct view type display apparatus,
said optical state variation being independent of an original display image and generating no hampering effect when said displayed image is directly watched.

**20.** An optical state modulation apparatus of a luminance modulation application system, wherein:

a periodic luminance modulation in temporal domain is applied to a light source of a direct view type display apparatus to generate an optical state variation on a recorded image that is obtained by image-capturing of a displayed image,
said displayed image being an image from the modulated light source of said direct view type display apparatus,
said optical state variation being independent of an original display image and generating no hampering effect when said displayed image is directly watched.

**21.** An optical state modulation apparatus of a luminance modulation application system, wherein:

a periodic luminance modulation in temporal domain is applied to an image signal of a direct view type display apparatus to generate an optical state variation on a recorded image that is obtained by image-capturing of a displayed image,

said displayed image being an image according to the modulated image signal of said direct view type display apparatus,

said optical state variation being independent of an original display image and generating no hampering effect when said displayed image is directly watched.

22. Apparatus for displaying an image, comprising:

a display unit, and

a modulation unit generating temporal modulation in an original image to be displayed on said display unit, wherein

said luminance modulation causes an optical state variation perceivable by a human vision on a recorded image obtained by image-capturing of the modulated original display image, and

said optical state variation causes no substantial visible effect perceivable by the human vision when said modulated original display image is directly watched.

23. Apparatus for displaying an image, comprising:

means for displaying an image, and

means for generating temporal modulation in an original image to be displayed, wherein

said luminance modulation causes an optical state variation perceivable by a human vision on a recorded image obtained by image-capturing of the modulated original display image, and

said optical state variation causes no substantial visible effect perceivable by the human vision when said modulated original display image is directly watched.

# FIG.1

# FIG.2

VERTICAL AXIS INDICATES RECORDING LUMINANCE RATIO
FOR DISPLAY LUMINANCE A(1-$\alpha$)
HORIZONTAL AXIS INDICATES THE NUMBER OF FRAMES.
60 FRAMES CORRESPOND TO ONE SECOND

# FIG.3

# FIG.4

# FIG.5

# FIG.6

# FIG.7

# FIG.8

# FIG.9

# FIG.10

```
        7A                    7B                        7D
    ┌──────────┐      ┌──────────────┐      ┌──────────────┐
    │  IMAGE   │      │OPTICAL STATE │      │OPTICAL STATE │
──▶ │INFORMATION│ ──▶ │ MODULATION   │ ──▶  │ MODULATION   │──▶
    │ DETECTOR │      │  CONDITION   │      │CONTROL SIGNAL│  S2
    └──────────┘      │DETERMINATION │      │  CONVERTER   │
   S1                 │     UNIT     │      └──────────────┘
                      └──────┬───────┘
                             │↕
              7C   ┌──────────────┐
         7        │  SELECTABLE  │
                  │  CONDITION   │
                  │ RECORD TABLE │
                  └──────────────┘
```

# FIG.11

```
   4
        1D    1C              1B                    1A
      ┌┐   ┌─────┐    ┌──────────────┐      ┌──────────┐
      ││  ╱│LIGHT│    │   CURRENT    │      │  POWER   │
      ││ ╱ │SOURCE│◀─ │  MODULATION  │ ◀──  │  SUPPLY  │
      ││ ╲ │     │    │  APPARATUS   │      └──────────┘
      └┘   └─────┘    └──────────────┘
       ▲
       │
      IMAGE SIGNAL
```

# FIG.12

4

IMAGE SIGNAL

1C

LIGHT SOURCE

1B

CURRENT MODULATION APPARATUS

1A

POWER SUPPLY

# FIG.13A

1FRAME

SIGNAL LEVEL

t

# FIG.13B

1FRAME

SIGNAL LEVEL

t

# FIG.14

4

1     S3     8     S1

DISPLAY
APPARATUS

IMAGE SIGNAL
MODULATION
APPARATUS

# FIG.15

FRAME SYNC
SIGNAL    8B     8D

8A    IMAGE
SIGNAL

MEMORY

S1

READ-OUT
SIGNAL

IMAGE
MODULATION
PROCESSING
UNIT

IMAGE
OUTPUT
UNIT    S3

MODULATION
CONDITION
RECORD TABLE    8C

# FIG.16

# FIG.17

# FIG.18

1D

1C

1B

1A

LIGHT SOURCE

CURRENT MODULATION APPARATUS

POWER SUPPLY

IMAGE SIGNAL

# FIG.19

IMAGE SIGNAL

1C

1B

1A

LIGHT SOURCE

CURRENT MODULATION APPARATUS

POWER SUPPLY

# FIG.20

```
      1                    S3                8                        S1
                                                                      
 ┌─────────────┐    ←──         ┌──────────────────┐        ←──
 │   DISPLAY   │  ←─────────────│  IMAGE SIGNAL    │←───────────
 │  APPARATUS  │                │  MODULATION      │
 └─────────────┘                │  APPARATUS       │
                                └──────────────────┘
```